# EUROPEAN PATENT APPLICATION

(11) **EP 2 633 761 A1**
(43) Date of publication of application: **04.09.2013**
(21) Application number: 11835676.5
(22) Date of filing: 27.10.2011
(51) Int. Cl.: A22C 13/00, A22C 11/00

(54) **METHOD FOR OBTAINING ARTIFICIAL SAUSAGE CASING FOR FOODSTUFFS, ARTIFICIAL CASING AND RESULTING PRODUCTS OBTAINED**

(30) Priority: 29.10.2010 ES 201031596
(71) Applicant: Viscofan, S.A., 31192 Tajonar (Navarra) (ES)
(72) Inventor: GARCIA MARTINEZ, Ion, Iñaki, E-31192 Tajonar (Navarra) (ES); LONGO ARESO, Carlos María, E-31192 Tajonar (Navarra) (ES)
(74) Representative: Carpintero Lopez, Francisco
(86) International application number: PCT/ES2011/070746
(87) International publication number: WO 2012/056080

(57) **Abstract**

The present invention relates to a method for obtaining artificial casing for filling foodstuffs and artificial casing obtained by means of said method, which comprises extruding gel through an output slot having a closed, polygonal and non-circular geometric configuration, obtaining a tubular film with a circular cross-section due to the effect of pressure exerted by a fluid that is injected into said hollow tubular film, such that the artificial casing obtained has a high dilation capacity in its cross-section, while at the same time maintaining the same longitudinal traction values as a casing obtained using a circular slot of the same caliber.

## Description

### Technical Field of the Invention

The present invention has an application in the food industry and more specifically in the field for producing artificial casing for filling foodstuffs.

### Backaround of the Invention

Today the use of artificial casings for filling meat products is progressively replacing the use of natural casings due to the industrial advantages of said artificial casings both from a health and economic point of view.

Among the artificial casings known today, artificial fibrous collagen casings originating from the skins of porcine or bovine animals are the most widely used in the meat industry due to their excellent performance when filling and processing the filled meat products as well as to their natural appearance. On the other hand, in addition to the existence of edible collagen casings, collagen casings can be processed in the same manner as natural casings to obtain a wide range of foodstuffs including cooked, fresh, cured, dried or smoked products, as well as products allowing the growth of edible moulds.

Collagen casings can generally be classified as edible casings and non-edible casings. In turn, within each of these categories there are many subcategories depending on the type of meat product for which the casing is intended, the type of processing of said meat product after filling, and the way it is presented to the consumer.

In addition to the foregoing, regardless of the type of meat foodstuff to be obtained, the existence of a market demand for meat products with several calibers must be considered, therefore in addition to the specific type of product to be obtained, there is a need to manufacture casings of different calibers depending on the caliber of the meat product to be filled.

Caliber is the thickness of the meat product, i.e., the diameter of a cross-section of the casing when said casing is completely inflated or filled with meat paste at a certain pressure, i.e., once filled, this factor being the leading factor giving rise to the need of producing a large amount of different casings, taking into account that a specific casing is commonly used for obtaining a filled meat product of a specific caliber.

In addition to the drawbacks for the producer of the aforementioned casings, the customer of the casings in turn needs to have and keep a certain amount of casings in stock for each of the calibers of the products to be filled, which constitutes a drawback from the logistic and of course the economic point of view since changing caliber means a time consumption with an economic cost in production.

### Description of the Invention

A first aspect of the present invention relates to a method for obtaining artificial casing for filling foodstuffs, such as meat products like sausages for example. According to the invention, the method comprises the following steps:
- a step a) which comprises preparing an extrudable gel, preferably an acid comprising a fibrous collagen dispersion,
- a step b) which comprises arranging an extrusion head which, regardless of its mechanical characteristics, comprises an output slot for the exit of the extruded material having a closed and non-circular geometric configuration, i.e., not an annular configuration, also being able to be curved, oval or polygonal, and
- a step c) which comprises extruding the extrudable gel prepared in step a) through the output slot arranged in step b), obtaining a hollow tubular film while at the same time maintaining pressure inside the tubular film higher than the pressure outside said tubular film. It has been proven that given the behavior of the extruded material, an inner positive pressure difference not less than 2 cm H₂O is enough to prevent the casing from flattening or collapsing.

Regarding the configuration of the output slot, it is necessary to mention that a specific type of artificial casing giving rise to sausages with a curved configuration in which said curved configuration is achieved by means of extruding the matter for forming the artificial casing through a circular slot has been described, however, even though the outer and inner contours of the slot are both circular, they are off-center, whereby a greater thickness is achieved on one side causing the curvature of the casing when extruded. A method for obtaining these casings is described in United States Patent Application No. US-1645050-A and US-1654253-A.

In contrast, in the case of the invention, it is considered that the output slot does not have an annular configuration provided that none of its outer or inner contours is non-circular.

During step c) of the invention, the tubular film can be maintained hollow, i.e., without it collapsing or flattening or breaking due to overpressure, in two ways. First, creating a vacuum on the outside of the tubular film is contemplated. Secondly, the possibility of injecting fluid, preferably a gas, with a sufficient pressure into the tubular film is contemplated so that the tubular film adopts a substantially cylindrical configuration.

In the case of the invention, as the tubular film moves forward and away from the output slot, the cross-section of the hollow tubular film adopts a circular configuration due to the effect of pressure exerted by a fluid that is injected into said hollow tubular film.

Logically, the thickness of the output slot is that which determines the thickness of the film obtained, such that since said output slot has a closed configuration, the extrusion comprised by the method is a tubular extrusion.

A surprising discovery was uncovered in the course of a series of research aimed to study the behavior of collagen pastes during the tubular extrusion process in which, when the geometry of the extrusion slot is modified, and more specifically when the conventional slot with an annular or circular configuration corresponding to a specific caliber is changed for an output slot with for example a polygonal configuration, the dimensions of which have been calculated to provide a cylindrical casing of the same caliber and grammage, the casing thus obtained acquires a high dilation capacity in its cross-section, while at the same time maintains the same longitudinal traction values as in the case of the casing obtained by means of a circular slot.

As described, the main advantage of the invention for the casing user industry is that a specific casing which is capable of adapting to more than one caliber during the filling process can be made available. In addition to having this advantage, the rest of the physical properties allowing the correct performance of the casings during filling and their subsequent processing are maintained. Likewise, the casing thus obtained keeps its appearance without any considerable change such that it is gladly accepted by consumer.

Until now, synthetic casings whether of collagen or other protein, cellulose, fibrous, or plastic casings have been extruded through circular slots known commonly as annular slots. The film formed when a plastic mass made, for example, of collagen goes through that slot is a cylindrical tubular film and it keeps its shape after the extrusion due to the pressure of the gas contained therein. Said gas can be air or a gas or a mixture of gases with coagulating effect, for example ammonia, which is injected into the tubular film which has been formed under a controlled pressure, which keeps the cylindrical shape of the film since the film is flexible.

The only way to assure that a casing extruded through a polygonal slot keeps the shape of a tube with said polygonal section indefinitely is that it houses therein a solid mass having said polygonal section. This case can only be provided in the variant of extrusion called co-extrusion which is not the type of extrusion of the invention since in the case of the invention the casing is extruded independently. In contrast, in co-extrusion both the film or casing and its content are extruded at the same time such that the casing rests directly on the paste of product to be filled. In co-extrusion the shape of the slot through which the casing is extruded completely mirrors the shape of the hole through which the meat material for filling same is co-extruded. United States Patent Application No. US-2007/0026777-A1 relating to the co-extrusion of Landjäger sausages with non-cylindrical sections is highly illustrative of this special case. The shape and final dimensions of the co-extruded sausage are determined by the shape of the meat paste outlet.

In the case of the invention, it is deduced from the laws of physics that if a mass is extruded through a slot which is not circular or annular, for example triangular, the tubular film obtained would adopt a substantially cylindrical configuration a little while after exiting the extrusion head provided that said film is flexible and the necessary gas pressure therein is maintained. If instead of a gas a fluid material is injected into the tubular film, said film quickly adopts the cylindrical configuration provided that the inner fluid pressure was sufficient. Due to this reason, the shape of the extrusion slot does not seem to be the factor determining the shape of the future sausage, as shown below in the examples. In this sense, it is also clear that the fact of replacing the annular shape of the extrusion slot for obtaining a casing for filling has never been proposed probably due to this reason given that in principle the shape of the slot was not expected to have any special technical effect.

The casings obtained with the method of the invention have an appearance similar to those obtained by tubular extrusion by means of an annular or circular slot, and for a given composition and caliber, the weight of dry matter (mainly collagen) per unit of length is the same in both. However during filling, the casing originating from non-annular extrusion has greater dilation capacity linearly depending on the filling pressure. This allows predetermining the caliber by means of setting a constant filling pressure. Surprisingly the longitudinal traction of the casing of the invention is maintained which allows the correct subsequent processing of the filled products.

Likewise, it is contemplated that, in addition to collagen, the extrudable gel comprises fat and other additives which can belong to the group of reinforcing, cross-linking, plasticizing and lubricating substance; substances providing organoleptic characteristics such as colorants and pigments, flavorings; as well as substances promoting the adhesion of the casing to the meat or facilitating peeling.

The possibility that the method comprises the following steps after step c) is contemplated:
- a step d) which comprises coagulating the tubular film obtained in step c).

The possibility that the method comprises, after step d), a step e) which comprises performing a process for finishing the artificial casing obtained, comprising any step selected from curing, drying, winding and shirring, or a combination thereof, i.e., by means of any of the methods known in the art, is contemplated.

On the other hand, it is contemplated that step a) comprises preparing an extrudable gel comprising porcine collagen, preferably defatted below a level of 10% of fat by dry weight, where the collagen can originate from porcine skins and hides both of young and adult animals and especially of breeding sows.

Likewise, it is contemplated that step a) comprises preparing an extrudable gel comprising bovine collagen, where the collagen can originate from bovine skins and hides.

Likewise, it is contemplated that step a) comprises preparing an extrudable gel comprising collagen originating from other sources, or from a mixture of the above.

Once an artificial casing is obtained according to the method of the invention, a filled foodstuff can be obtained, for which a foodstuff is filled in said artificial casing, after which said product can be hung on hangers, cooked and smoked.

A second aspect of the invention relates to an artificial casing for filling foodstuffs obtained by means of the method described above.

Without attempting to limit the following interpretation, it is considered that the desired effect of the invention is produced by the technical effect of the following features:
a) difference in thickness at the corners of the polygon and in the chords of said polygon,
b) alternating thick and thin longitudinal areas in the casing,
c) where the thin areas allow greater casing dilation for a specific pressure, and
d) where the thick areas maintain the longitudinal tensile strength.

### Description of the Drawings

To complement the description that is being made and for the purpose of aiding to better understand the features of the invention according to a preferred practical embodiment thereof, a set of drawings is attached as an integral part of said description in which the following has been depicted with an illustrative and non-limiting character:
Figure 1 shows a graph in which the thickness profiles of the control casing (std) and hexagonal casing (Hex) have been depicted, expressed in mm on the y-axis along 15 equidistant points in the transverse direction of the casing depicted on the x-axis.
Figure 2 shows a perspective view of a piece of equipment in which the method of the invention is carried out, showing both the extrusion head with a hexagonal output slot and the tubular film obtained forming the artificial casing the cross-section of which is modified from hexagonal to circular after being extruded.
Figure 3 shows a perspective view such as that of Figure 2 but with a more ample view, in which a larger section of extruded casing and a larger number of elements of the piece of equipment in which it is obtained can be seen.
Figure 4 shows a detailed view of the casing obtained in the piece of equipment depicted in Figures 2 and 3, specifically of the area close to the extrusion head.
Figure 5 shows a detailed view of the extrusion head in which the casing of the invention has been obtained, in which the output slot with a hexagonal configuration can be seen.
Figure 6 shows a detailed view of the extrusion head in which the casing of the invention has been obtained, in which the output slot with a decagonal configuration can be seen.

### Preferred Embodiment of the Invention

Next in view of the drawings described, various comparative examples which have been made according to one of the possible embodiments of the invention are described.

The unexpected effect derived from extruding through a non-annular slot, in the following examples, a hexagonal slot, can be seen in the results of the different parameters measured in a collagen casing obtained when performing the following examples, as well as in the result of filling and processing Wiener sausages carried out with said casings. All the examples correspond to a preferred embodiment of this variant of collagen casing extrusion, which is the extrusion through a hexagonal slot, and in each of them a control casing extrusion through a circular slot has been performed using the same collagen paste of each example and obtaining the same circular and grammage caliber as the hexagonal casing of the corresponding example.

### Example 1 a: Porcine collagen casing.

Example 1a uses, as the raw material, a fibrous collagen acid paste originating from the salted skins of adult porcine animals and specifically breeding sows prepared according to the technique described in the British Patent Application No. GB-2359241-A. The skins were first desalted with running water in a rotary washing drum until the chloride level in the effluent stream reached a value less than 0.2%.

The collagen paste used, the composition of which can be seen in Table I, was extruded through an output slot with a hexagonal configuration, such as that depicted in the drawings, and through an extrusion slot with a circular or annular configuration, such as those used in the state of the art, the extrusion heads housing similar rotary elements in relation to both slots, as is known in the state of the art, in order to position the collagen fibers.

**Table I. Composition of collagen paste**

| | % by weight with respect to extrudable gel |
|---|---|
| Collagen | 9.00 |
| Fat | 0.36 |
| Cellulose | 0.45 |
| Glycerol | 1.35 |
| Glyoxal | 0.018 |

The casing extruded with the circular slot is called control casing, the caliber corresponding to the circular slot of 27 mm. The other head has been redesigned to house a plate with a hexagonal output slot with a side of 13.28 mm and an opening of 0.70 mm, the same as in the control, the perimeter of which is the same as the annular circular slot of the other head such that the grammage of both casings is the same at the same extrusion rate. The casing extruded through the hexagonal slot is called hexagonal casing.

Both casings were subjected to the same coagulating, curing and drying process before winding. The nominal caliber obtained was 24 mm.

The physical parameters of the collagen casings were then measured by means of the common techniques in the art which are described below:

Longitudinal traction: The longitudinal tensile force was measured in an INSTRON 4411 apparatus using a 100 N load cell and a test piece of 10 cm in length in the direction of the machine. After submerging the sample for 30 minutes in water at 25ºC, it was secured in the clamps of the apparatus and subjected to stress by separating said clamps at a rate of 100 mm/min until the breaking point. The maximum breaking load is considered as the longitudinal traction and the percentage of deformation as the elongation.

Dilatability: The width of the planar casing or flat width (FW) expressed in Table II is a measurement in mm equivalent to half the perimeter of the casing, from which the initial diameter is calculated. When the internal air pressure is 100 mm Hg, the diameter obtained provides a ratio with respect to the initial diameter reflecting the casing dilatability.

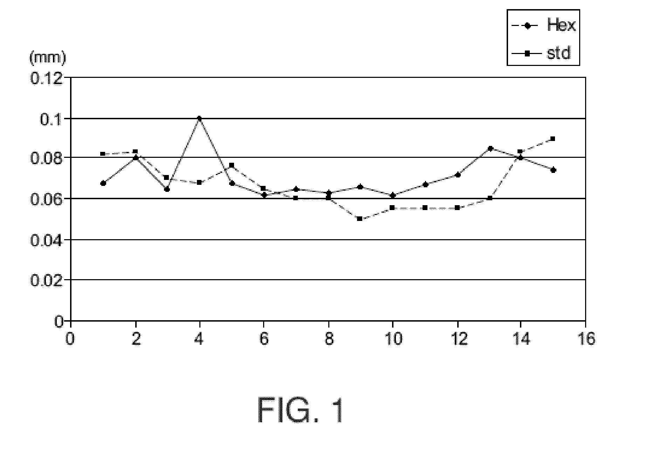

Thickness: The transverse profile of the casing thickness was measured by means of an Elektro-Physik Köln Typ 104.00.00 apparatus. The thickness is expressed in mm and measured along 15 equidistant points in the transverse direction of the casing as can be seen in the graph corresponding to Figure 1 where the thickness profile of the control and hexagonal casings has been depicted, there being no significant differences between both casings.

### Example 1b: Performance of the casings in meat product filling and processing.

In this example, the two types of casings obtained in Example 1a, the control and hexagonal casings, have been filled with a common meat paste for Frankfurter sausages. To that end a VEMAG- ROBBY 2 filler was used. Both casings have been filled to a nominal initial caliber of 25.8 mm and at a rate of 80 portions per minute, using to that end the brake control of the filler machine. The filling pressure in the control casing was increased by means of said control which casing reacted by increasing its caliber slightly. With a similar pressure, the reaction of the hexagonal casing was a significant increase in caliber which was, nevertheless, kept constant while the pressure remained unchanged.

Under these circumstances, the longitudinal traction of both casings was kept in similar values which allowed the casings to have a correct performance during the subsequent processing of both sausage batches.

The results obtained can be seen in Table II.

**Table II**

| Test | Control casing | Hexagonal casing |
|---|---|---|
| pH | 4.83 | 4.82 |
| Traction (N) | 29.7 | 29.3 |
| Elongation (%) | 27.4 | 21.2 |
| Flat width (mm) | 39.0 | 39.0 |
| Caliber Ø100 (mm) | 27.07 | 30.13 |
| Dilatability | 1.09 | 1.21 |

The sausages obtained were then hung on hangers to be cooked and smoked without having observed any casing breakages or sausage deformations.

Sausages prepared with both types of casing had a similar outer appearance once processed. A check by cutting the sausages shows that both sausages are cylindrical which demonstrates that the configuration of the extrusion slot of the casing does not significantly influence the final shape of the filled sausage but it does influence the mechanical properties of the casing.

### Example 2a: Bovine collagen casing.

Example 2a used, as the raw material, a fibrous collagen acid paste originating from the hides of bovine animals prepared according to the techniques described in any of the United States Patent Applications No. US-3235641-A, US-3579358-A and US-3930035-A.

The collagen paste the composition of which can be seen in Table III was extruded through the same independent extrusion heads as in Example 1 a, one of them being of a slot with a standard annular configuration and the other a slot with a hexagonal configuration.

**Table III. Collagen paste composition**

| | % by weight with respect to extrudable gel |
|---|---|
| Collagen | 9.50 |
| Glycerol | 1.52 |
| Glyoxal | 0.029 |

Like Example 1a, the casings were subjected to the same coagulating, curing and drying process before winding. The nominal caliber obtained was 24 mm.

The physical parameters were then measured by means of the same common techniques as in Example 1 a.

**Table IV**

| Test | Control casing | Hexagonal casing |
|---|---|---|
| pH | 4.85 | 4.81 |
| Traction (N) | 35.1 | 35.8 |
| Elongation (%) | 24.9 | 20.1 |
| Flat width (mm) | 39.0 | 39.1 |
| Caliber Ø100 (mm) | 26.8 | 29.3 |
| Dilatability | 1.08 | 1.18 |

### Example 2b: Performance of the casings in meat product filling and processing.

The two types of casings obtained in Example 2a, the control and hexagonal casings, have been filled in the same conditions as those described in Example 1 b, similar results being obtained.

### Example 3:

### Example 3a: Bovine collagen casing extruded through a decagonal slot.

This example used a collagen mass corresponding with that described in Example 2a.

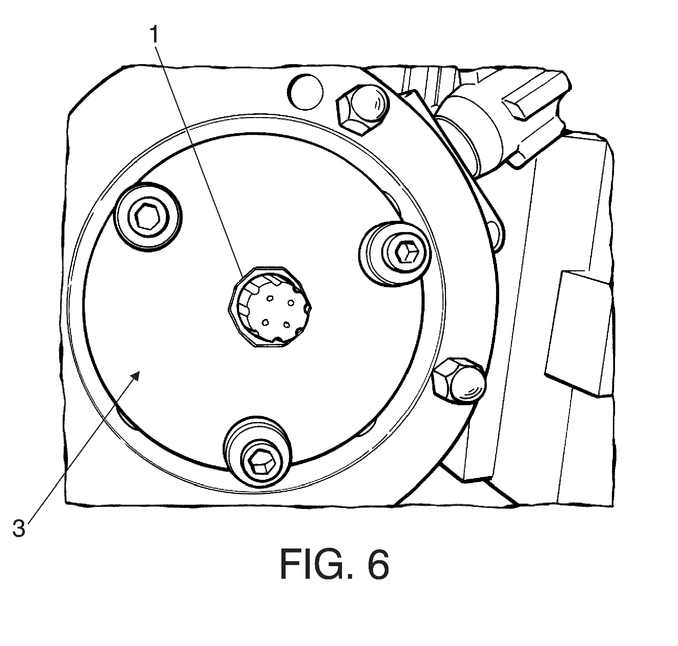

The collagen paste was extruded through of a decagonal extrusion head, the side of which measures 7.23 mm and the perimeter of which is equivalent to that of a 23 caliber (72.26 mm) (see Figure 6). As a control, the paste was also extruded through a 23 caliber annular head. In both cases the gap was 0.70 mm.

Like Example 1a, both extrusions were subjected to the same coagulating, curing and drying process before winding. The physical parameters were then measured by means of the same common techniques as in Example 1 a and the results of which can be seen in the following Table V:

**Table V**

| Test | Control casing (23 cal) | Decagonal casing |
|---|---|---|
| pH | 6.28 | 6.26 |
| Thickness (µm) | 42 | 45 |
| Traction (N) | 33.3 | 33.5 |
| Elongation (%) | 26.2 | 28.3 |
| Flat width (mm) | 36.8 | 36.9 |
| Caliber Ø100 (mm) | 26.1 | 28.2 |
| Dilatability | 1.11 | 1.20 |

The results clearly show that compared with an annularly extruded casing of the same caliber, the casing extruded through a decagonal slot has a much higher dilatability, but preserves its longitudinal tensile strength.

### Example 3b: Performance of the casings in meat product filling and processing.

In this example, the two types of casings obtained in 3a, the control and decagonal casings, have been filled in the same conditions as those described in Example 1 b for manufacturing Frankfurter sausages. Both casings were filled at a nominal caliber of 24.8 mm, using to that end the brake control of the filling machine. Like Example 1b, as the filling pressure increases, the control casing reacted by increasing its caliber slightly, whereas the decagonal casing increased its caliber up to 25.6 mm. Since the caliber increases and the amount of meat emulsion per sausage remains same, the result is shorter sausages.

### Example 4:

### Example 4a: Extrusion of a fresh bovine collagen casing through a hexagonal slot.

Example 4a used, as raw material, a fibrous collagen acid paste obtained according to the method described in Example 2a, but in which composition glyoxal or any other chemical curing agent has not been used.

The collagen paste was extruded through a hexagonal extrusion head the perimeter of which is equivalent to a 23 caliber. As a control, the paste was also extruded through a 23 caliber annular head equivalent to that of the hexagonal casing.

After extrusion, the casings were coagulated with ammonia gas, washed with water, subjected to dehydration and plasticization by means of passing through a tank containing a CMC (Carboxy Methyl Cellulose) and glycerin solution and were then dried and moistened before winding. The physical parameters were then measured by means of the same common techniques as in Example 1 a, with the exception that in the case of caliber and dilatability which, due to the lower resistance of such casing, were calculated for an internal air pressure of 50 mm Hg, and the results of which can be seen in the following Table VI:

**Table VI**

| Test | Control casing (23 cal) | Hexagonal casing |
|---|---|---|
| pH | 7.77 | 7.65 |
| Traction (N) | 23.9 | 23.5 |
| Elongation (%) | 23.0 | 25.8 |
| Flat width (mm) | 31.8 | 32.0 |
| Caliber ∅50 (mm) | 26.9 | 30.4 |
| Dilatability | 1.33 | 1.49 |

The results clearly show that compared with an annularly extruded casing of similar caliber, the fresh casing extruded through a hexagonal slot also has a higher dilatability and preserves its longitudinal tensile strength, enabling filling same in a greater range of calibers.

### Example 4b: Performance of the casings in meat product filling and processing.

In this example, the two types of casings obtained in Example 4a, the control and hexagonal casings, have been filled with a common meat paste for "Breakfast USA" sausages. To that end, a coarsely minced meat paste was prepared according to the formula of Table VII.

**Table VII**

| INGREDIENTS | % |
|---|---|
| Pork shoulder | 40 |
| Pork jowl | 54 |
| Water | 2.8 |
| Salt | 1.7 |
| Dextrose | 0.3 |
| Pepper | 0.15 |
| Sodium glutamate | 0.1 |
| Nutmeg | 0.1 |
| Garlic | 0.2 |
| Colorant | 0.2 |

The filling was performed in a VEMAG- ROBBY 2 filler with a twisting arm, producing sausages of 10 cm in length and with a nominal caliber of 24 mm. The sausages we manually cut with scissors. They were then frozen for 24 hours, no deformations being observed, and the frying test was conducted on a grill and in a deep-fryer. In both cases the result was satisfactory, there being no significant bursting or breakages.

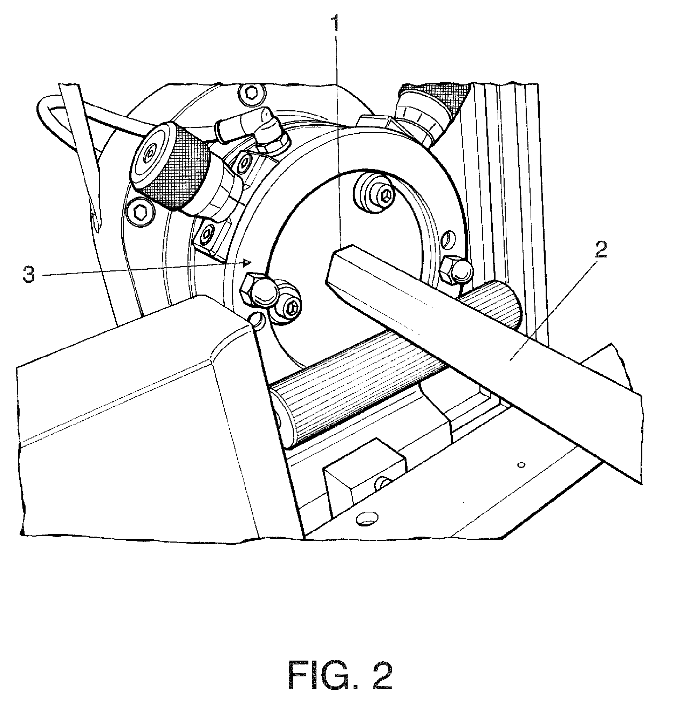

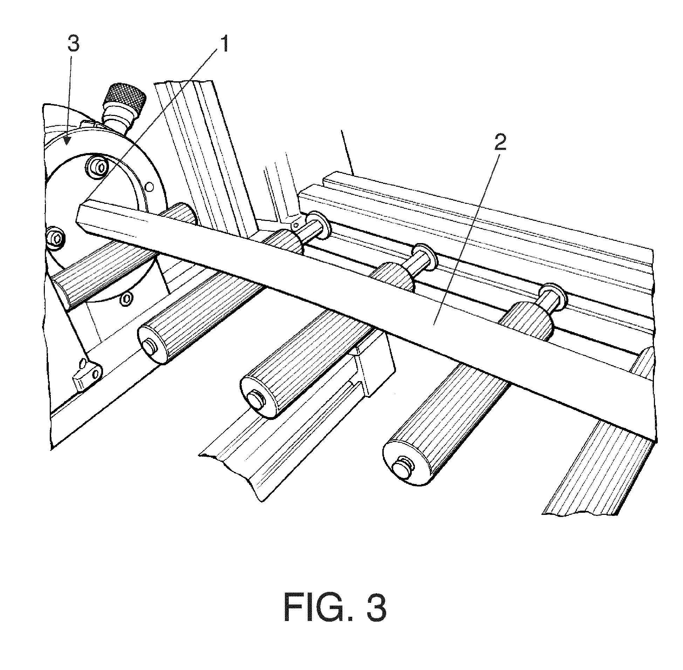

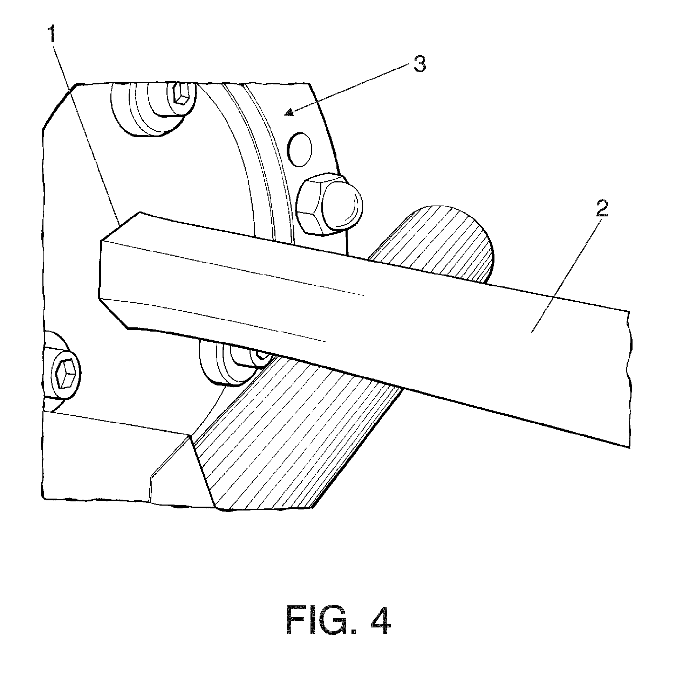

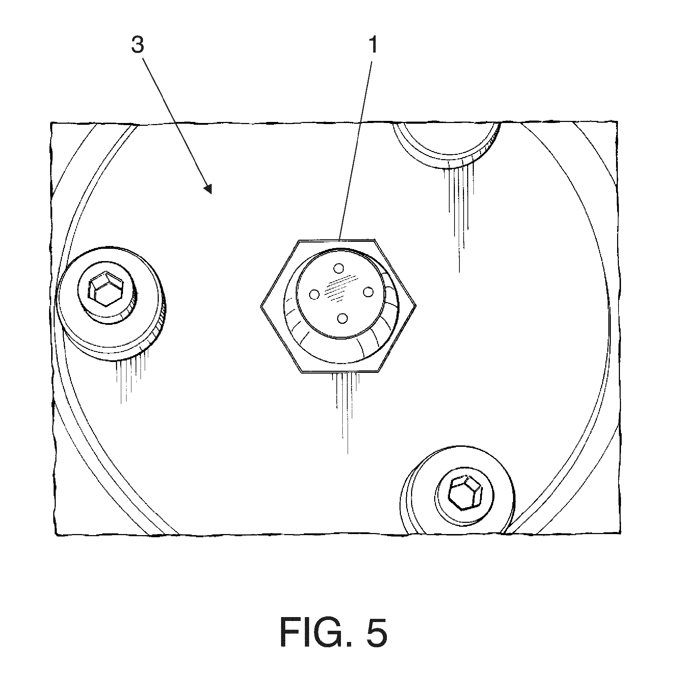

Figures 2 to 4 in turn depict three perspective views of a piece of equipment in which the method of the invention is being performed, both the extrusion head (3) with an output slot (1) having a hexagonal configuration and the tubular film (2) obtained forming the artificial casing which casing after being extruded modifies its cross-section from hexagonal to circular, being able to be seen. Figure 5 depicts the extrusion head (3) in detail where the output slot (1) can be seen in greater detail.

Figure 6 depicts a detail of the extrusion head (3) in which the output slot (1) has a decagonal configuration.

In view of this description and the set of drawings, the person skilled in the art will be able to understand that the embodiments of the invention which have been described can be combined in many ways within the object of the invention. The invention has been described according to several preferred embodiments thereof, but for the person skilled in the art it will be evident that multiple variations can be introduced in said preferred embodiments without exceeding the object of the claimed invention. For example, when referring to a polygonal configuration, it is not essential that the sides are straight or the same, nor it is essential that they have the same radius or the same thickness, said thickness referred to the opening defined by the slot on each regular or irregular side or section of the slot.

## Claims

1. Method for obtaining artificial casing for filling foodstuffs, comprising:
- a step a) which comprises preparing an extrudable gel comprising a fibrous collagen dispersion,
**characterized in that** it comprises:
- a step b) which comprises arranging an extrusion head (3) comprising an output slot (1) for the exit of the extruded material having a closed and non-circular geometric configuration, and
- a step c) which comprises extruding the extrudable gel prepared in step a) through the output slot (1) arranged in step b), obtaining a hollow tubular film (2) while at the same time maintaining pressure inside the tubular film (2) higher than the pressure outside said tubular film (2).

2. Method for obtaining artificial casing for filling foodstuffs according to claim 1, **characterized in that** step c) comprises injecting pressurized fluid with a sufficient pressure into the film (2) so that the tubular film (2) adopts a substantially cylindrical configuration.

3. Method for obtaining artificial casing for filling foodstuffs according to any of the preceding claims, **characterized in that** the output slot (1) for the exit of the extruded material has a closed polygonal geometric configuration.

4. Method for obtaining artificial casing for filling foodstuffs according to any of the preceding claims, **characterized in that** after step c) the method comprises:
- a step d) which comprises coagulating the tubular film (2) obtained in step c).

5. Method for obtaining artificial casing for filling foodstuffs according to claim 4, **characterized in that** after step d) the method comprises a step e) which comprises performing a process for finishing the artificial casing obtained, comprising any step selected from curing, drying, winding and shirring, or a combination thereof.

6. Method for obtaining artificial casing for filling foodstuffs according to any of claims 4 and 5, **characterized in that** step a) comprises preparing an extrudable gel comprising porcine collagen.

7. Method for obtaining artificial casing for filling foodstuffs according to any of claims 4 and 5, **characterized in that** step a) comprises preparing an extrudable gel comprising bovine collagen.

8. Method for obtaining a filled foodstuff which comprises obtaining artificial casing according to the method defined in any of claims 1 to 7, **characterized in that** it additionally comprises filling a foodstuff into said artificial casing.

9. Artificial casing for filling foodstuffs, **characterized in that** it is obtained by means of the method defined in any of claims 1 to 7.

10. Filled foodstuff, **characterized in that** it is obtained by means of the method defined in claim 8.
